# NEUE EUROPÄISCHE PATENTSCHRIFT

(11) **EP 2 243 001 B2**
(45) Veröffentlichungstag und Bekanntmachung des Hinweises auf die Entscheidung über den Einspruch: **20.02.2019**
(45) Hinweis auf die Patenterteilung: 27.05.2015
(21) Anmeldenummer: 09710302.2
(22) Anmeldetag: 16.02.2009
(51) Int. Cl.: G01G 23/18

(54) **WAAGE UND VERFAHREN ZU DEREN KONFIGURIERUNG**
BALANCE AND METHOD FOR CONFIGURING THE SAME
BALANCE ET PROCÉDÉ POUR LA CONFIGURER

(30) Priorität: 14.02.2008 DE 102008009115
(43) Veröffentlichungstag der Anmeldung: 27.10.2010
(73) Patentinhaber: Bizerba SE & Co. KG, 72336 Balingen (DE)
(72) Erfinder: AMMAN, Karl Markus Rainer, 72458 Albstadt (DE); WINKLER, Robert, 72406 Bisingen (DE); GRESPAN, Ralf, 72336 Balingen (DE); ROHM, Steffen Michael, 72488 Sigmaringen (DE)
(74) Vertreter: Manitz Finsterwald Patentanwälte PartmbB
(86) Internationale Anmeldenummer: PCT/EP2009/001068
(87) Internationale Veröffentlichungsnummer: WO 2009/100945

(56) Entgegenhaltungen:
- WO-A-02/14809
- WO-A-2007/104481
- DE-A1-102006 011 791

## Beschreibung

Die Erfindung betrifft ein Verfahren zur Konfiguration der Interaktion zwischen einer Waage und damit kommunizierenden Ein-/Ausgabegeräten, sowie eine Waage, bei der ein derartiges Verfahren zum Einsatz gelangt.

Es ist bekannt, Waagen mit Zusatzfunktionälitäten auszustatten, die über den reinen Wägevorgang weit hinausgehen. Derartige Zusatzfunktionalitäten sind beispielsweise eine an Kunden gerichtete Anzeige von Werbung, eine automatische Benutzererkennung, eine automatische Warenerkennung und dergleichen. Weiterhin ist es bekannt, unterschiedlichen Benutzern der Waage über entsprechend gestaltete Oberflächen unterschiedliche Funktionalitäten anzubieten.

Um derartige Waagen realisieren zu können, ist es nötig, eine Bedienoberfläche der Waage in Abhängigkeit von einer jeweils aktuell genutzten Funktionalität auf unterschiedliche Weisen anzusteuern. Bei einem Großteil der Anwendungsfälle wird dies durch unterschiedliche Layouts eines mit der Waage gekoppelten Bildschirms realisiert, wobei hier die Layouts spezifisch an die jeweils aktuelle Funktionalität angepasst sind. Es existieren jedoch auch Anwendungsfälle, bei denen die Bedienoberfläche nicht nur durch einen Bildschirm, sondern zusätzlich auch durch eine Sprachausgabe oder einen Drucker realisiert ist, wobei auch hier dann entsprechende Funktionalitätsanpassungen vorzunehmen sind.

Nachteilig an Waagen der beschriebenen Art ist die Tatsache, dass sich deren Bedienung oftmals kompliziert und zeitaufwändig gestaltet. Insbesondere eine Bedienung durch Kunden oder ungeschultes Personal ist häufig problematisch.

DE 100 39 668 A1 beschreibt eine Waage, welche dazu ausgelegt ist, mit Ein- und/oder Ausgabegeräten zu kommunizieren, wobei eine Interaktionslogik für die Kommunikation der Waage mit den Ein- und/oder Ausgabegeräten fest vorgegeben ist, und wobei voneinander verschiedene, benutzerabhängige Parametersätze zur Verfügung stehen. DE 10 2006 011 791 A1 beschreibt eine entsprechende Waage. Bei Parametern handelt es sich um feste Werte, die innerhalb eines vorgegebenen Bereichs variiert werden können, wie z.B. Schriftgröße, Font, Hintergrundfarbe oder Sprache einer Bildschirmausgabe.

Eine Aufgabe der Erfindung besteht darin, ein Verfahren der eingangs genannten Art sowie eine Waage, bei der ein solches Verfahren zum Einsatz gelangt, bereitzustellen, die eine einfachere und schnellere Bedienung ermöglichen. Insbesondere soll es möglich werden, die Interaktionsmöglichkeiten mit der Waage, z.B. eine Bedienoberfläche der Waage, auch nach deren Auslieferung mit wenig Aufwand zu ändern oder anzupassen.

Diese Aufgabe wird erfindungsgemäß gelöst durch ein Verfahren zur Konfiguration der Interaktion zwischen einer Waage und damit kommunizierenden Ein-/Ausgabegeräten,
mit einem Usermodul für die Ansteuerung von Ausgabegeräten und die Abfrage von Eingabegeräten, wobei durch das Usermodul die Interaktionsfunktionalitäten der Waage definiert sind,
mit mehreren Profilmodulen für die Spezifizierung der durch das Usermodul vorgegebenen Interaktionsfunktionalitäten,
wobei die Profilmodule in Abhängigkeit von vom Usermodul empfangenen Daten automatisch mit dem Usermodul gekoppelt werden.

Weiterhin wird die genannte Aufgabe gelöst durch eine Waage mit internen und/oder externen Ein-/Ausgabegeräten,
mit einem Usermodul für die Ansteuerung der Ausgabegeräte und die Abfrage der Eingabegeräte, wobei durch das Usermodul die Interaktionsfunktionalitäten der Waage definiert sind,
mit mehreren Profilmodulen für die Spezifizierung der durch das Usermodul vorgegebenen Interaktionsfunktionalitäten, und
einer Kopplungseinheit für die automatische Kopplung zumindest eines der Profilmodule mit dem Usermodul in Abhängigkeit von vom Usermodul oder vom Kopplungsmodul empfangenen Daten.

Der Begriff Interaktionsfunktionalität umfasst beispielsweise Funktionalitäten der Waage hinsichtlich einer Interaktion zwischen einem Benutzer und der Waage, vorzugsweise Eingabefunktionen, Ausgabefunktionen und Zusatzfunktionen wie Werbefunktionen, also z. B. cross merchandising.

Erfindungsgemäß gelangt also ein modulartiger Aufbau zum Einsatz, bei dem eine Unterteilung in zumindest ein Usermodul und mehrere Profilmodule gegeben ist. Das Usermodul, das in der Regel von einem Benutzer nachträglich nicht mehr verändert werden kann, legt lediglich die Interaktionsfunktionalitäten der Waage fest und muss, um eine komplette Ansteuerung der Waage übernehmen zu können, mit einem Profilmodul gekoppelt werden, welches die durch das Usermodul vorgegebenen Interaktionsfunktionalitäten näher spezifiziert. Die Profilmodule sind dabei bevorzugt von einem Benutzer nachträglich noch veränderbar und somit an die jeweils gegebenen individuellen Bedürfnisse anpassbar.

Die Profilmodule definieren ein Interaktionsprofil, mit dem unter anderem eine Bedienoberfläche, die Dateneingabe sowie die Datenausgabe der Waage konfiguriert wird.

Bei bisherigen Lösungen musste ein Server für eine Eingabe die verschiedenen Dateneingaben der Waagen ständig abfragen. Bei der Erfindung übernimmt das Usermodul diese Abfrage und transformiert die Daten auf der einen Seite in eine für einen Benutzer einfach lesbare Form und andererseits in eine für einen Server einfach lesbare Datensequenz.

Beispielsweise kann folgende Funktionsweise vorgesehen sein. Wenn ein Geschäftsablauf eine Artikelerkennung erwartet und in dem Profilmodul eine Eingabe über Scanner oder Tastatur konfiguriert ist, wird das Usermodul die von dem Scanner oder der Tastatur empfangenen Daten in eine Datensequenz für den Server transformieren und diese dann an den Server übertragen. Eine dann vom Server als Antwort gesendete neue Datensequenz kann dann abhängig von der Datensequenz und der im Profilmodul hinterlegten Konfiguration eine weitere Interaktion auslösen, wie z.B. eine weiter Artikelerkennung bei einem fehlerhaften Artikel oder sie führt den Geschäftsablauf weiter, z. B. eine Artikelregistrierung oder einen Verkaufsabschluss.

Somit können die Profilmodule unterschiedliche Funktionalitäten der Waage definieren, wobei beispielsweise für jede der Funktionalitäten bzw. jeden der Geschäftsabläufe "Abverkauf", "Inventur", "Wartung/Service", etc. ein separates Profilmodul zur Verfügung steht.

Je nach Bedarf kann das Usermodul somit in Abhängigkeit von dem jeweils angekoppelten Profilmodul z.B. einmal eine Benutzeroberfläche zum Wiegen, ein andermal eine Informationsoberfläche für einen Kunden oder in einem wiederum anderen Anwendungsfall eine Serviceoberfläche zur Wartung der Waage durch einen Techniker ansteuern.

Ein wesentlicher Vorteil der Erfindung ist darin zu sehen, dass die Profilmodule in Abhängigkeit von vom Usermodul empfangenen Daten automatisch mit dem Usermodul gekoppelt werden. Wenn die Waage beispielsweise mit einem Benutzererkennungsmodul ausgestattet ist und durch dieses Benutzererkennungsmodul einen Benutzer erkennt, der als Filialleiter agieren darf, empfängt das Usermodul die Rolle des Filialleiters kennzeichnende Daten, woraufhin das Usermodul automatisch mit einem filialleiterspezifischen Profilmodul gekoppelt wird. Aufgrund dieser Kopplung kann dem Filialleiter dann beispielsweise die Interaktion für die Rolle des Filialleiters bereitgestellt werden, im Rahmen derer er Artikelarten, Preisdaten oder Layouts von Bildschirmanzeigen ändern kann.

Wenn beispielsweise ein Benutzererkennungsmodul einen bestimmten Verkäufer erkennt, kann in entsprechender Weise eine Kopplung mit einem verkäuferspezifischen Profilmodul erfolgen. Es ist dabei vorgesehen, dass aufgrund der versendeten Daten das zugeordnete Profilmodul bzw. Interaktionsprofil selektiert und mit dem Usermodul gekoppelt wird. Ein solches verkäuferspezifisches Profilmodul bzw. Interaktionsprofil kann beispielsweise bewirken, dass sämtliche Anzeigen für den Verkäufer in einer Sprache erfolgen, die seiner Staatsbürgerschaft entspricht.

Erfindungsgemäß kann sich die Waage somit automatisch und sehr schnell auf den jeweils gewünschten Anwendungsfall einstellen. In vielen Fällen kann dies vollautomatisch geschehen, ohne dass ein Benutzer irgendeine Eingabe an der Waage vornehmen muss, da die Kopplung zwischen dem Usermodul und dem jeweils passenden Profilmodul in Abhängigkeit von den empfangenen Datensätzen oder Datensequenzen erfolgt.

Die Daten können dabei beispielsweise von angeschlossenen Eingabegeräten, wie einem Benutzererkennungsmodul, an das Usermodul übermittelt werden, können aber auch von anderen Quellen stammen, die nachfolgend noch erläutert werden.

Insbesondere werden durch die Profilmodule Regelwerke für die Verarbeitung von Parametern geschaffen. Die Grenzen für das Regelwerk werden durch Grundfunktionen, die das User-Modul bereitstellt, vorgegeben. Bei den Profilmodulen handelt es sich um Programmmodule, beispielsweise XML-Scripte. Durch die Profilmodule können Regeln für die Datenverarbeitung aufgestellt werden. Insbesondere können Bedingungen definiert werden, nach denen eine Verarbeitung eines bestimmten Parameters erfolgt. Beispielsweise kann festgelegt werden, ob bzw. wie auf ein bestimmtes Datenformat reagiert werden soll, z.B. ob eine MP3-Datei in Audio-Form ausgegeben oder eine Visualisierung gestartet wird.

Insbesondere werden die durch das Usermodul vorgegebenen Interaktionsfunktionalitäten durch die Vorgabe von Regeln und/oder Bedingungen zur Verarbeitung von Daten spezifiziert, wobei bevorzugt die Vorgabe der Regeln und/oder Bedingungen als ausführbares Script erfolgt.

Bevorzugt ist es, wenn die Profilmodule von einem Benutzer erweiterbar und/oder veränderbar sind. Auf diese Weise kann nach Auslieferung der Waage vom jeweiligen Benutzer selbst noch eine Anpassung der Funktionalitäten der Waage vorgenommen werden, ohne dass hierfür ein Servicetechniker bemüht werden muss.

In den Profilmodulen wird insbesondere die Interaktion der Waage festgelegt. Also kann darin definiert sein, welche Ein-/Ausgabegeräte zu aktivieren oder zu deaktivieren sind. So kann beispielsweise ein Benutzer immer selbst aktuell festlegen, mit welchen Ein-/Ausgabegeräten eine Waage kommunizieren soll. Wenn also beispielsweise ein neues Eingabegerät, wie beispielsweise ein Spracherkennungsmodul, angeschlossen werden soll, ist es nicht nötig, hierfür einen Servicetechniker anzufragen, da es vielmehr ausreichend ist, wenn der Filialleiter ein Profilmodul derart modifiziert, dass es für die Ansteuerung eines Spracherkennungsmoduls geeignet ist. Alternativ könnte das Spracherkennungsmodul auch einfach an die Waage angeschlossen werden, woraufhin es Kenndaten an das Usermodul sendet, welches dann automatisch eine Kopplung mit einem Profilmodul vornimmt, welches bereits in der Waage vorhanden und dazu geeignet ist, ein Spracherkennungsmodul anzusteuern.

Besonders bevorzugt ist es, wenn die Profilmodule zumindest einen Verweis, insbesondere einen Zeiger oder ein Mapping über Tabellenreferenzen auf eine oder mehrere Interaktionsdateien enthalten, welcher ein bestimmtes Design definiert, das grafische Elemente und/oder Textelemente enthält oder eine Sprachausgabe passend zu einem Artikel aktiviert und die Eigenschaften der Sprachausgabe definiert, also z.B. ob die Sprachausgabe männlich oder weiblich oder laut oder leise erfolgt. Dies bedeutet, dass die tatsächlich zur Anzeige gelangenden Interaktionsdaten nicht im Profilmodul selbst enthalten sind. Vielmehr existieren diese Daten in Form einer separaten Datei, und im Profilmodul selbst ist lediglich ein Zeiger auf diese Datei enthalten.

Ein Profilmodul kann auch mehrere Zeiger auf unterschiedliche Interaktionsdateien enthalten, welche beim Betrieb des mit dem Profilmodul gekoppelten Usermoduls in Abhängigkeit vom jeweiligen Betriebszustand aktiviert werden. So kann in einem einzelnen Anwendungsfall, bei dem ein bestimmtes Profilmodul mit dem Usermodul gekoppelt bleibt, zwischen verschiedenen Anzeigemodi umgeschaltet werden.

Bevorzugt aktiviert ein Profilmodul in Abhängigkeit vom jeweiligen Betriebszustand gleichzeitig mehrere Interaktionsdateien. Beispielsweise kann dann bei demselben Profilmodul auf einem Verkäuferdisplay eine Bildschirmausgabe in der Sprache des Verkäufers und auf einem Kundendisplay eine Bildschirmausgabe in der Sprache des Kunden ausgegeben werden, wobei die beiden Sprachen voneinander verschieden sind. Weitere bislang noch nicht unterstützte Sprachen können durch Installation einer weiteren Interaktionsdatei auf einfache Weise hinzugefügt werden.

Nach einer Ausführungsform der Erfindung werden durch das User-Modul alle grundsätzlichen Interaktionsfunktionalitäten festgelegt. Die Profilmodule dienen zur Spezifizierung der durch das User-Modul vorgegebenen Interaktionsfunktionalitäten, die automatisch gekoppelt werden. Die Interaktionsdateien dienen zum Speichern von Parametern.

Besonders bevorzugt ist es, wenn die genannten Interaktionsdateien mittels eines Interaktions-Designers modifizierbar sind. Auf diese Weise lassen sich je nach den Bedürfnissen der Kunden, des Marktes, in dem die Waage aufgestellt ist, oder des Bedienpersonals mit einem Screendesigner Änderungen am Bildschirmlayout in grafischer und textlicher Hinsicht vornehmen. Lediglich beispielhafte sei erwähnt, dass die Sprache der textlich dargestellten Information verändert werden kann, dass Eingabefelder eines Touch-Screens verschoben, modifiziert, hinzugefügt oder gelöscht werden können, dass Bildinformationen geändert werden können, oder dass eine Stimme einer Lautsprecherausgabe geändert werden kann.

Ein Interaktionsdesigner ist ein Werkzeug, mit dem die insbesondere multimediale Interaktion von Benutzern mit der Waage festgelegt wird. Insbesondere wird die Art und Weise der Eingabe und oder der Ausgabe von Daten wie auch deren Darstellung festgelegt. Multimediale Interaktion bedeutet, dass außer dem Medium Schrift noch optische und akustische Eingaben und/oder Ausgaben von Daten für die Interaktion zwischen Benutzer und Waage vorgesehen sind.

In den Interaktionsdateien werden die durch den Interaktionsdesigner festgelegten Interaktionsprofile gespeichert. Eine Interaktionsdatei kann Parameter, insbesondere Betriebsparameter von Eingabegeräten und/oder Ausgabegeräten, also deren Parametrierung enthalten. Die Interaktionsdateien können neben Betriebsparametern beispielsweise aber auch Ressourcen wie die Sprache oder den Font enthalten. Zudem kann die Interaktionsdatei ein Layout einer Benutzeroberfläche und/oder einer Sprachausgabe und/oder einer Bild- oder Videoausgabe enthalten.

Ein Screendesigner kann z.B. ein Bestandteil eines Interaktionsdesigners sein, wobei der Screendesigner die optische Darstellung einer Benutzeroberfläche festlegen kann.

Grundsätzlich ist es möglich, durch Wechsel des Profilmoduls und gleichzeitiger Beibehaltung der Interaktionsdatei(en) die Funktionalität der Waage (z.B. Bedienlogik oder Bedienerrechte) bei gleich bleibenden Parametern zu verändern.

Besonders vorteilhaft ist es, wenn das Usermodul auch Daten von Diensten empfängt, die von einem Server geliefert werden. Ein solcher Server kann beispielsweise den Dienst einer Bilderkennung zur Verfügung stellen, so dass aufwändige Bilderkennungsalgorithmen nicht von einem an die Waage angeschlossenen Eingabegerät und auch nicht vom Usermodul erledigt werden müssen. Vielmehr kann das mit einem jeweiligen Profilmodul gekoppelte Usermodul die beispielsweise von einer Kamera erhaltenen Daten an einen Server zur Bildauswertung übertragen, der dann die Bildverarbeitung übernimmt und als Ergebnis beispielsweise die Kennung eines erkannten Benutzers an das Usermodul zurückliefert. Auch derartige Daten können dann die Kopplung des Usermoduls mit einem jeweils passenden Profilmodul bewirken, so dass generell festzustellen ist, dass erfindungsgemäß die Kopplung von Profilmodulen mit dem Usermodul in Abhängigkeit von beliebigen, vom Usermodul empfangenen Daten erfolgen kann, wobei solche Daten insbesondere von einem Eingabegerät oder von einem Server geliefert werden. Natürlich kann der Server beliebige weitere Aufgaben übernehmen, wie beispielsweise eine Bonverwaltung, das Datenmanagement für eine Inventur, etc.

Als Eingabegerät kann erfindungsgemäß zumindest eine der folgenden Komponenten zum Einsatz gelangen:
Benutzererkennungsmodul (Käufer/Verkäufer), Warenerkennungsmodul, Spracherkennungsmodul, Kartenleser, E-Cash-Leser, Scanner, Computermaus, Tastatur, Schlüsselschalter, Netzhautscanner, Kamera, RF-Identifikationsmodul, Fingerprintsensor.

So kann beispielsweise ein Kunde in einem Laden über ein Benutzererkennungsmodul erkannt werden und über mit der Waage gekoppelte Anzeigeeinrichtüngen auf besondere Angebote aufmerksam gemacht werden, die zu seinen früheren Einkäufen passen. Das hierfür geeignete Profilmodul wird aufgrund der erfolgen Benutzererkennung mit dem Usermodul gekoppelt und greift nun beispielsweise auf einen Dienst des Servers zu, der über sein Datenmanagement Informationen über die früheren Einkäufe des jeweiligen Kunden vorliegen hat und diese dementsprechend dem Usermodul übermitteln kann.

Dabei müssen die früheren Einkäufe des Kunden nicht unbedingt über ein und dieselbe Waage abgewickelt worden sein. Vielmehr ist es möglich, mehrere erfindungsgemäße Waagen zu einem Netzwerk zu verbinden, wenn die Waagen, was bevorzugt ist, mit zumindest einer Schnittstelle zur Kommunikation mit weiteren Waagen und/oder einem Server ausgestattet sind. Wenn ein solches Netzwerk einen Server aufweist, können dessen Dienste allen Waagen zur Verfügung gestellt werden, so dass beispielsweise alle über verschiedene Waagen getätigten Einkäufe eines Kunden in einer vom Server verwalteten Datenbank gespeichert werden können.

In einem Netzwerk der beschriebenen Art, welches mit oder ohne Server ausgeführt sein kann, ist es weiterhin bevorzugt, wenn jede der Waagen auf die Funktionalitäten der anderen Waagen zugreifen kann, so dass auch vergleichsweise einfachen Waagen die Funktionalitäten von komplexeren Waagen zur Verfügung stehen. Auf diese Art und Weise kann das Gesamtnetzwerk kostengünstiger realisiert werden, da es genügt, bestimmte Funktionalitäten nur an einzelnen Waagen vorzusehen.

Als Ausgabegerät kann bei einer erfindungsgemäßen Waage zumindest eine der folgenden Komponenten zum Einsatz gelangen:
Anzeigeeinrichtung, insbesondere Bildschirm, bevorzugt mehrere Bildschirme, Kassenschublade, Verpackungsmaschine, Display, Drucker, Sprachausgabe zur Benutzerführung oder Audiowiedergabe von Audiodateien.

Erfindungsgemäß kann sich also beispielsweise ein bestimmter Verkäufer mittels eines RF-Identifikationsmoduls bei der Waage anmelden, woraufhin das auf ihn angepasste Profilmodul mit dem Usermodul gekoppelt wird. In diesem Profilmodul ist hinterlegt, dass der Verkäufer griechischer Herkunft ist, so dass alle Anzeigen auf einem Verkäuferbildschirm in griechischer Sprache erfolgen. Wenn nun die Waage über ein Benutzererkennungsmodul einen Kunden erkennt, für den in der Waage bzw. im Server hinterlegt ist, dass er die spanische Sprache spricht, kann im aktiven Profilmodul ein Zeiger auf eine Interaktionsdatei aktiviert werden, welche in spanischer Sprache gehalten ist. Alle Anzeigen auf einem Kundenbildschirm können dann entsprechend dieser Interaktionsdatei in spanischer Sprache erfolgen. Um die entsprechenden Einstellungen an der Waage vorzunehmen, genügt es erfindungsgemäß, wenn der jeweilige Verkäufer und der jeweilige Kunde erkannt werden, da alle dementsprechend benötigten Einstellungen dann vollautomatisch vorgenommen werden.

Weitere bevorzugte Ausführungsformen der Erfindung sind in den Unteransprüchen erläutert.

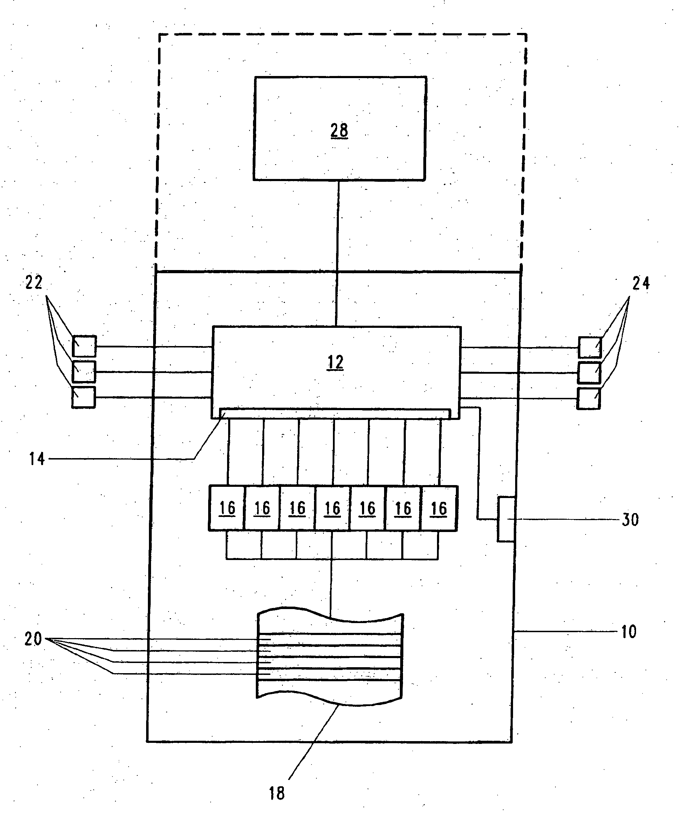

Die Erfindung wird nachfolgend anhand der Zeichnung beispielhaft beschrieben.

Die einzige Figur zeigt in schematischer Darstellung eine Waage 10, in der ein Usermodul 12 angeordnet ist. Bestandteil des Usermoduls 12 ist eine Kopplungseinheit 14, über die das Usermodul 12 wahlweise mit einem Profilmodul 16 gekoppelt werden kann. Im dargestellten Beispielfall sind insgesamt sieben voneinander verschiedene Profilmodule 16 vorhanden, die mit der Kopplungseinheit 14 verdrahtet sind und die dementsprechend in Abhängigkeit vom jeweiligen Anwendungsfall mit der Usermodul 12 koppelbar sind.

Die Profilmodule 16 stehen mit einem Speicher 18 in Verbindung, in welchem eine Vielzahl von Interaktionsdateien 20 gespeichert ist. Wie bereits erläutert, enthalten die Profilmodule 16 jeweils zumindest einen Zeiger auf eine der Interaktionsdateien 20, so dass die Interaktionsdateien 20 die Gestaltung einer Anzeige oder eines Bildschirms definieren, die bzw. der von dem mit einem Profilmodul 16 gekoppelten Usermodul 12 aktiviert wird.

Das Usermodul 12 ist mit drei Eingabegeräten 22 und drei Ausgabegeräten 24 gekoppelt. Wie bereits erläutert, werden diese Ein-/Ausgabegeräte 22, 24 über das jeweils ausgewählte Profilmodul 16 aktiviert, deaktiviert und parametriert.

Schließlich steht das Usermodul 12 auch mit einem Server 28 in Verbindung, welcher der Waage 10 übergeordnete Dienste der bereits erläuterten Art zur Verfügung stellt und auch Daten an die Waage 10 liefern kann, die dann die automatische Kopplung des Usermoduls 12 mit einem bestimmten Profilmodul 16 bewirken. Der Server 28 kann dabei bezogen auf die Waage 10 ein externes Bauteil darstellen. Alternativ kann der Server 28 aber auch Bestandteil der Waage 10 sein, was in der Figur durch die gestrichelte Linienführung angedeutet ist.

Über eine mit dem Usermodul 12 in Verbindung stehende Schnittstelle 30 kann die Waage 10 mit weiteren Waagen oder einem externen Server oder aber auch mit einem Bussystem kommunizieren, an das beliebige weitere Geräte angeschlossen werden können.

### Bezugszeichenliste

10 Waage
12 Usermodul
14 Kopplungseinheit
16 Profilmodul
18 Speicher
20 Interaktionsdateien
22 Eingabegeräte
24 Ausgabegeräte
28 Server
30 Schnittstelle

## Patentansprüche

1. Verfahren zur Konfiguration der Interaktion zwischen einer Waage (10) und damit kommunizierenden Ein-/Ausgabegeräten (22, 24), mit einem Usermodul (12) für die Ansteuerung von Ausgabegeräten (24) und die Abfrage von Eingabegeräten (22), wobei durch das Usermodul (12) die Interaktionsfunktionalitäten der Waage (10) definiert sind,
mit mehreren Profilmodulen (16) für die Spezifizierung der durch das Usermodul (12) vorgegebenen Interaktionsfunktionalitäten, wobei die Profilmodule (16) in Abhängigkeit von vom Usermodul (12) empfangenen Daten automatisch mit dem Usermodul (12) gekoppelt werden,
**dadurch gekennzeichnet,**
**dass** die Profilmodule als Programmmodule ausgebildet sind.

2. Verfahren nach Anspruch 1,
**dadurch gekennzeichnet,**
**dass** die durch das Usermodul (12) vorgegebenen Interaktionsfunktionalitäten durch die Vorgabe von Regeln und/oder Bedingungen zur Verarbeitung von Daten spezifiziert werden, wobei bevorzugt die Vorgabe der Regeln und/oder Bedingungen als ausführbares Script erfolgt.

3. Verfahren nach einem der vorhergehenden Ansprüche,
**dadurch gekennzeichnet,**
**dass** die Profilmodule (16) von einem Benutzer erweiterbar und/oder veränderbar sind und/oder die Profilmodule (16) definieren, welche Ein-/Ausgabegeräte (22, 24) zu aktivieren oder zu deaktivieren sind.

4. Verfahren nach einem der vorhergehenden Ansprüche,
**dadurch gekennzeichnet,**
**dass** die Profilmodule (16) zumindest einen Verweis auf eine Interaktionsdatei (20) enthalten, welche eine Sprachausgabe und/oder Audioausgabe und/oder ein bestimmtes Design definiert, das graphische Elemente und/oder Textelemente enthält.

5. Verfahren nach Anspruch 4,
**dadurch gekennzeichnet,**
**dass** zumindest ein Profilmodul (16) mehrere Zeiger auf Interaktionsdateien (20) enthält, welche beim Betrieb des mit dem Profilmodul (16) gekoppelten Usermoduls (12) in Abhängigkeit vom jeweiligen Betriebszustand aktiviert werden.

6. Verfahren nach Anspruch 4 oder 5,
**dadurch gekennzeichnet,**
**dass** ein Profilmodul (16) in Abhängigkeit vom jeweiligen Betriebszustand gleichzeitig mehrere Interaktionsdateien aktiviert.

7. Verfahren nach einem der Ansprüche 4 bis 6,
**dadurch gekennzeichnet,**
**dass** die Interaktionsdateien (16) Betriebsparameter für die Ein-/Ausgabegeräte (22, 24) definieren und/oder mittels eines Interaktionsdesigners modifizierbar sind.

8. Verfahren nach einem der vorhergehenden Ansprüche,
**dadurch gekennzeichnet,**
**dass** das Usermodul (12) auch Daten von Diensten empfängt, die von einem Server (28) geliefert werden.

9. Verfahren nach einem der vorhergehenden Ansprüche,
**dadurch gekennzeichnet,**
**dass** als Eingabegerät (12) zumindest eine der folgenden Komponenten zum Einsatz gelangt:
Benutzererkennungsmodul (Käufer/Verkäufer), Warenerkennungsmodul, Spracherkennungsmodul, Kartenleser, E-Cash-Leser, Scanner, Computermaus, Tastatur, Schlüsselschalter, Netzhautscanner, Kamera, RF-Identifikationsmodul, Fingerprintsensor, und/oder dass als Ausgabegerät (24) zumindest eine der folgenden Komponenten zum Einsatz gelangt:
Anzeigeeinrichtung, insbesondere Bildschirm, bevorzugt mehrere Bildschirme, Kassenschublade, Verpackungsmaschine, Display, Drucker, Sprachausgabe zur Benutzerführung oder Audiowiedergabe von Audiodateien.

10. Waage (10) mit internen und/oder externen Ein-/Ausgabegeräten (22, 24),
mit einem Usermodul (12) für die Ansteuerung der Ausgabegeräte (24) und die Abfrage der Eingabegeräte (22), wobei durch das Usermodul (12) die Interaktionsfunktionalitäten der Waage (10) definiert sind,
mit mehreren Profilmodulen (16) für die Spezifizierung der durch das Usermodul (12) vorgegebenen Interaktionsfunktionalitäten, und einer Kopplungseinheit (14) für die automatische Kopplung zumindest eines der Profilmodule (16) mit dem Usermodul (12) in Abhängigkeit von vom Usermodul (12) empfangenen Daten,
**dadurch gekennzeichnet,**
**dass** die Profilmodule als Programmmodule ausgebildet sind.

11. Waage nach Anspruch 10,
**dadurch gekennzeichnet,**
**dass** die Waage (10) zumindest eine Schnittstelle (30) zur Kommunikation mit weiteren Waagen (10) und/oder einem Server aufweist, wobei bevorzugt mehrere Waagen (10) über deren Schnittstellen (30) zu einem Netzwerk verbunden sind, wobei jeder dieser Waagen (10) die Funktionalitäten der anderen Waagen (10) zur Verfügung stehen, wobei bevorzugt das Netzwerk einen Server aufweist, dessen Dienste allen Waagen (10) zur Verfügung stehen.

## Claims

1. A method for the configuration of the interaction between scales (10) and input/output devices (22, 24) communicating therewith, having a user module (12) for the control of output devices (24) and the querying of input devices (22), with the interaction functions of the scales (10) being defined by the user module (12); and
having a plurality of profile modules (16) for the specification of the interaction functions predefined by the user module (12),
wherein the profile modules (16) are automatically coupled to the user module (12) in dependence on data received by the user module (12),
**characterized in that** the profile modules are formed as program modules.

2. A method in accordance with claim 1,
**characterized in that**
the interaction functions predefined by the user module (12) are specified by the presetting of rules and/or conditions for the processing of data, with the presetting of the rules and/or conditions preferably taking place as an executable script.

3. A method in accordance with one of the preceding claims,
**characterized in that**
the profile modules (16) can be expanded and/or modified by a user and/or the profile modules (16) define which input/output devices (22, 24) are to be activated or are to be deactivated.

4. A method in accordance with any one of the preceding claims,
**characterized in that**
the profile modules (16) include at least one reference to an interaction file (20) which defines a voice output and/or an audio output and/or a specific design which includes graphical elements and/or text elements.

5. A method in accordance with claim 4,
**characterized in that**
at least one profile module (16) includes a plurality of pointers to interaction files (20) which are activated in dependence on the respective operating state on the operation of the user module (12) coupled to the profile module (16).

6. A method in accordance with claim 4 or claim 5,
**characterized in that**
a profile module (16) activates a plurality of interaction files simultaneously in dependence on the respective operating state.

7. A method in accordance with any one of the claims 4 to 6,
**characterized in that**
the interaction files (16) define operating parameters for the input/output devices (22, 24) and/or can be modified by means of an interaction designer.

8. A method in accordance with any one of the preceding claims,
**characterized in that**
the user module (12) also receives data from services which are delivered from a server (28).

9. A method in accordance with any one of the preceding claims, **characterized in that**
at least one of the following components is used as an input device (12):
user recognition module (buyer/salesperson), product recognition module, language recognition module, card reader, e-cash reader, scanner, computer mouse, keyboard, key switch, retinal scanner, camera, RF identification module, fingerprint sensor; and/or
**in that** at least one of the following components is used as the output device (24):
display device, in particular monitor, preferably a plurality of monitors, cash register drawer, packaging machine, display, printer, voice output for user guidance or audio playback of audio files.

10. Scales (10) having internal and/or external input/output devices (22, 24)
having a user module (12) for the control of the output devices (24) and the querying of the input devices (22), with the interaction functions of the scales (10) being defined by the user module (12); having a plurality of profile modules (16) for the specification of the interaction functions predefined by the user module (12); and having a coupling unit (14) for the automatic coupling of at least one of the profile modules (16) to the user module (12) in dependence on data received by the user module (12),
**characterized in that**
the profile modules are formed as program modules.

11. Scales in accordance with claim 10,
**characterized in that**
the scales (10) have at least one interface (30) for the communication with further scales (10) and/or with a server, wherein a plurality of scales (10) are preferably connected via their interfaces (30) to a network, with the functions of the other scales (10) being provided to each of these scales (10), with the network preferably having a server whose services are available to all the scales (10).

## Revendications

1. Procédé pour la configuration de l'interaction entre une balance (10) et des appareils d'entrée/sortie (22, 24) qui communiquent avec celle-ci, comprenant un module utilisateur (12) pour le pilotage des appareils de sortie (24) et pour l'interrogation des appareils d'entrée (22), dans lequel les fonctionnalités d'interaction de la balance (10) sont définies par le module utilisateur (12),
comprenant plusieurs modules de profil (16) pour la spécification des fonctionnalités d'interaction imposées par le module utilisateur (12), dans lequel les modules de profil (16) sont couplés automatiquement avec le module utilisateur (12) en fonction des données reçues par le module utilisateur (12),
**caractérisé en ce que** les modules de profil sont réalisés comme des modules de programme.

2. Procédé selon la revendication 1,
**caractérisé en ce que** les fonctionnalités d'interaction imposées par le module utilisateur (12) sont spécifiées en imposant des règles et/ou des conditions pour le traitement des données, et dans lequel l'imposition des règles et/ou des conditions a de préférence lieu sous forme de script exécutable.

3. Procédé selon l'une des revendications précédentes,
**caractérisé en ce que** les modules de profil (16) peuvent être étendus et/ou modifiés par un utilisateur, et/ou **en ce que** les modules de profil (16) définissent lesquels des appareils d'entrée/sortie (22, 24) doivent être activés ou désactivés.

4. Procédé selon l'une des revendications précédentes,
**caractérisé en ce que** les modules de profil (16) contiennent au moins une référence à un fichier d'interaction (20), lequel définit une sortie vocale et/ou une sortie audio et/ou un design déterminé qui contient des éléments graphiques et/ou des éléments textuels.

5. Procédé selon la revendication 4,
**caractérisé en ce qu'**au moins un module de profil (16) contient plusieurs pointeurs vers des fichiers d'interaction (20) qui, lors du fonctionnement du module utilisateur (12) couplé avec le module de profil (16), sont activés en fonction de l'état de fonctionnement respectif.

6. Procédé selon la revendication 4 ou 5,
**caractérisé en ce qu'**un module de profil (16) active simultanément plusieurs fichiers d'interaction en fonction de l'état de fonctionnement respectif.

7. Procédé selon l'une des revendications 4 à 6,
**caractérisé en ce que** les fichiers d'interaction définissent des paramètres de fonctionnement pour les appareils d'entrée/sortie (22, 24) et/ou sont modifiables au moyen d'un concepteur d'interaction.

8. Procédé selon l'une des revendications précédentes,
**caractérisé en ce que** le module utilisateur (12) reçoit également des données de services qui sont fournis par un serveur (28).

9. Procédé selon l'une des revendications précédentes,
**caractérisé en ce que** l'un au moins des composants suivants est employé comme appareil d'entrée (12) :
module de reconnaissance d'utilisateur (acheteur/vendeur), module de reconnaissance de marchandises, module de reconnaissance vocale, lecteur de carte, lecteur dit "E-Cash", scanner, souris d'ordinateur, clavier, commutateur à clé, scanner de rétine, caméra, module d'identification à RF, capteur d'empreintes digitales,
et/ou **en ce que** l'un au moins des composants suivants est employé comme appareil de sortie (24) :
système d'affichage, en particulier écran, de préférence plusieurs écrans, tiroir-caisse, machine d'emballage, affichage, imprimante, dispositif de sortie vocale pour le guidage d'un utilisateur ou pour la reproduction audio de données audio.

10. Balance (10) comprenant des appareils d'entrée/sortie (22, 24) internes et/ou externes,
comprenant un module utilisateur (12) pour le pilotage des appareils de sortie (24) et l'interrogation des appareils d'entrée (22), dans lequel les fonctionnalités d'interaction de la balance (10) sont définies par le module utilisateur (12),
comprenant plusieurs modules de profil (16) pour la spécification des fonctionnalités d'interaction imposées par le module utilisateur (12), et une unité d'accouplement (14) pour l'accouplement automatique de l'un au moins des modules de profil (16) avec le module utilisateur (12) en fonction des données reçues par le module utilisateur (12), **caractérisée en ce que** les modules de profil sont réalisés sous forme de modules de programme.

11. Balance selon la revendication 10,
**caractérisée en ce que** la balance (10) comprend au moins une interface (30) pour la communication avec d'autres balances (10) et/ou avec un serveur,
dans laquelle plusieurs balances (10) sont de préférence reliées via leurs interfaces (30) en un réseau, dans lequel les fonctionnalités des autres balances (10) sont à disposition de chacune de ces balances (10), et le réseau comprend de préférence un serveur dont les services sont à disposition de toutes les balances (10).
